# EUROPEAN PATENT SPECIFICATION

(11) **EP 4 129 856 B1**
(45) Date of publication and mention of the grant of the patent: **30.10.2024**
(21) Application number: 21779042.7
(22) Date of filing: 17.03.2021
(51) Int. Cl.: B65D 81/24, B65D 65/40, C08F 218/08

(54) **PACKAGE OF OXYALKYLENE GROUP-CONTAINING PVA-BASED RESIN, AND METHOD FOR MANUFACTURING THE SAME**
VERPACKUNG AUS OXYALKYLENGRUPPENHALTIGEM HARZ AUF PVA-BASIS UND VERFAHREN ZUR HERSTELLUNG DAVON
EMBALLAGE DE RÉSINE À BASE DE PVA CONTENANT UN GROUPE OXYALKYLÈNE, ET PROCÉDÉ DE PRODUCTION D'UN TEL EMBALLAGE

(30) Priority: 30.03.2020 JP 2020059340
(43) Date of publication of application: 08.02.2023
(73) Proprietor: Mitsubishi Chemical Corporation, Chiyoda-ku Tokyo 100-8251 (JP)
(72) Inventor: YANO, Tomotake, Tokyo 100-8251 (JP)
(74) Representative: Kuhnen & Wacker Patent- und Rechtsanwaltsbüro PartG mbB
(86) International application number: PCT/JP2021/010721
(87) International publication number: WO 2021/200134

(56) References cited:
- EP-A1- 3 392 165
- WO-A1-2016/052446
- WO-A1-2017/104501
- US-B2- 10 518 498
- KATSURA TADAHIKO: "Gas-barrier Polymers for Packaging Materials", KOBUNSHI, THE SOCIETY OF POLYMER SCIENCE, JAPAN, 1 December 2008 (2008-12-01), pages 974 - 977, XP055926701, Retrieved from the Internet <URL:https://www.jstage.jst.go.jp/article/kobunshi1952/57/12/57_12_974/_pdf/-char/en> [retrieved on 20220531], DOI: 10.1295/kobunshi.57.974

## Description

### TECHNICAL FIELD

The present invention relates to a package capable of storing an oxyalkylene group-containing PVA-based resin stably and a method for manufacturing the same.

### BACKGROUND

The polyvinyl alcohol-based resin (PVA-based resin) is usually shipped as a package in which the PVA-based resin powder or pellet is packed in a bag, from its manufacturing site. The package is distributed and traded in the market. The package may be stored in a container or a warehouse until a user who receives a delivered package takes out the PVA-based resin from the package. In the case of exporting overseas, the PVA-based resin will be kept in a state of packaging for a long time of distribution.

After the process such a distribution / storage process, the user takes out the PVA-based resin from the package and uses it for melt molding or preparing an aqueous solution according to an intended use. The PVA-based resin taken from the package sometimes has defects which was not predicted at the manufacturing site. The occurrence of defects may be reduced or avoided by choosing a proper bag for the packaging, although a variety of defects differ in causes depending on the type of PVA-based resin, storage period, distribution route, etc.

For example, an acetoacetyl group-modified PVA-based resin powder packed in the bag may undergo a crosslinking reaction between acetoacetyl groups as a modified group during long period of storage, because the acetoacetyl group contains an active hydrogen. When preparing an aqueous solution of the acetoacetyl group-modified PVA-based resin powder, a crosslinked substance generated from the crosslinking reaction may be insoluble in the aqueous solution, which is a known problem. For solving the problem, Patent Document 1 (WO 2016/052446) has proposed to pack acetoacetyl group-modified PVA-based resin powder with a bag made of a film having a water vapor permeability of 10 g/m² · day or less. The crosslinked substance of the acetoacetyl group-modified PVA-based resin may be generated particularly due to absorption of moisture. Therefore, the bag having a low water vapor permeability may prevent the occurrence of the crosslinking reaction while the package is stored.

On the other hand, regarding a melt moldable PVA-based resin such as side chain 1,2-glycol bond-containing PVA-based resin, there is a problem associated with melt molding of the PVA-based resin. When the PVA-based resin is molded with a melt extruder, a controlled operation may sometimes become difficult due to flowing back of the charged PVA-based resin (usually in a form of powder or granule) with a volatile component in the extruder. Patent Document 2 (WO 2017/104501) has proposed a solution of this problem by using a bag made of a film having a methanol vapor permeability of 0.5 to1000 g/m²· day. This proposal is on the basis that the residual volatile component may be a component such as methanol used in the synthesis of the PVA-based resin.

There is another problem concerning a property that PVA-based resin easily absorbs moisture. The absorbed moisture may vaporize when the PVA-based resin is melt-molded. The absorbed moisture increases quantity of volatile components and, like the residual methanol, may make the PVA-based resin flow back, which results in an unstable operation of the melt extruder. The Patent Document 2 proposed to use a low density polyethylene film bag for the package. The low density polyethylene film can suppress the permeation of water vapor which may be absorbed by the PVA-based resin packed in the bag but allows the methanol vapor contained in the PVA-based resin to go out from the inside of the bag, thereby reducing the quantity of vaporized methanol and moisture when the PVA-based resin is melt-molded.

However, another problem concerning an oxyalkylene group-containing PVA-based resin packed with a low density polyethylene film bag. If the package is distributed to a user after being stored for a long time period, the user may notice a colored oxyalkylene group-containing PVA-based resin when feeding it to melt-molding, and further notice a serious increase in viscosity of the oxyalkylene group-containing PVA-based resin when melt kneading it.

### PRIOR ART

### PATENT DOCUMENT

[Patent Document 1] WO 2016/052446
[Patent Document 2] WO 2017/104501

### SUMMARY OF THE INVENTION

### TECHNICAL PROBLEM TO BE SOLVED BY THE INVENTION

A purpose of the present invention is to provide a package of an oxyalkylene group-containing PVA-based resin free from a problematic increase in viscosity during melt kneading even if the package is stored for a long time period. Also, a method for producing the package is provided.

### MEANS FOR SOLVING THE PROBLEM

The present inventors analyzed the problem associated with the increase in viscosity in the case of melt kneading the oxyalkylene group-containing PVA-based resin after being stored for a long time period. The inventors considered that the oxyalkylene group may react with oxygen to generate a compound having a carboxyl group as shown in the following formula, and the compound having a carboxyl group would make a crosslinking reaction with a hydroxyl group in the oxyalkylene group-containing PVA-based resin, as a result, the viscosity is increased.

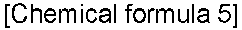

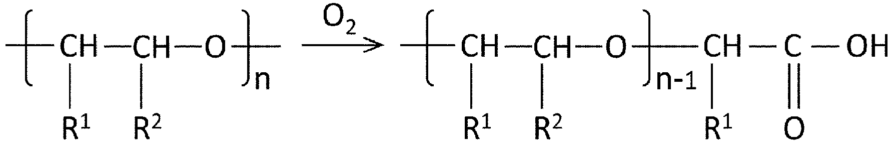

Based on the analysis, the inventors have studied from the viewpoint of preventing oxidation of the oxyalkylene group-containing PVA-based resin during storage and accomplished the invention.

The package of the present invention comprises a bag made of a film having an oxygen permeability of 1000 cc/m²·day·atm or less as an amount of oxygen permeated in 24 hours per 1 m² of the film under a condition of 25 °C and 65 %RH; and an oxyalkylene group-containing polyvinyl alcohol-based resin packed in the bag. The film may be a single-layer film or a multilayer film.

According to the invention, a preferable film has a water vapor permeability of 300 g/m²·day or less as an amount of water vapor permeated in 24 hours per 1 m² of the film under a condition of 40 °C and 90 %RH.

Another aspect of the present invention is a method of manufacturing a package. The method comprises packing an oxyalkylene group-containing polyvinyl alcohol-based resin in a bag made of a film having an oxygen permeability of 1000 cc/m²·day·atm or less as an amount of oxygen permeated in 24 hours per 1 m² of the film under a condition of 25 °C and 65 %RH.

In the present invention, the oxyalkylene group-containing polyvinyl alcohol-based resin usually refers to a resin having a structural unit represented by the following general formula (3).

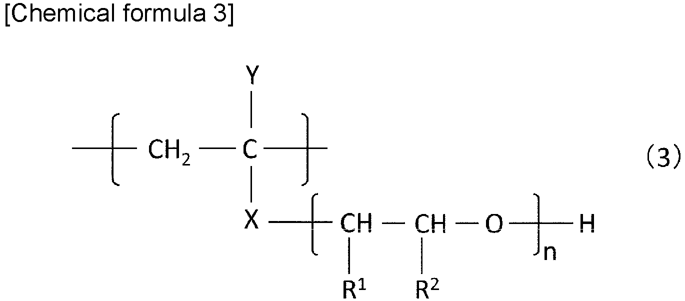

In the formula (3), X is a single bond or a binding chain, Y is a hydrogen atom or a methyl group, n is an integer of 1 to 50, and R¹ and R² each is independently a hydrogen atom or an alkyl group.

### EFFECT OF THE INVENTION

According to a package of the present invention or a package obtainable by a production method of the invention, the oxidation of the oxyalkylene group-containing PVA-based resin packed in the package may be suppressed, thereby suppressing the viscosity increase caused from the storage. Therefore, an oxyalkylene group-containing PVA-based resin in a state close to immediately after being produced may be provided even if the package of the oxyalkylene group-containing PVA-based resin is stored for a long time period in a distribution process.

### BRIEF DESCRIPTION OF THE DRAWINGS

Fig.1 is a graph showing dynamic viscosity behaviors of the oxyalkylene group-containing PVA-based resin taken out from the package No.1.
Fig.2 is a graph showing dynamic viscosity behaviors of the oxyalkylene group-containing PVA-based resin taken out from the package No.4.

### EMBODIMENT FOR CARRYING OUT THE INVENTION

### [Package of oxyalkylene group-containing PVA-based resin]

The package of the present invention comprises a bag made of a film having an oxygen permeability of 1000 cc/m²·day·atm or less as an amount of oxygen permeated in 24 hours per 1 m² of the film under a condition of 25 °C and 65 %RH; and an oxyalkylene group-containing polyvinyl alcohol-based resin packed in the bag.

### <Oxyalkylene group-containing PVA-based resin>

The oxyalkylene group-containing PVA-based resin, which is an object of the package, is a PVA-based resin containing a vinyl alcohol unit represented by the general formula (1), a vinyl ester unit represented by the general formula (2), and an oxyalkylene group-containing unit represented by the general formula (3). The vinyl alcohol unit is a basic structural unit of the PVA-based resin. The vinyl ester unit corresponds to an unsaponified portion when the saponification degree is less than 100%.

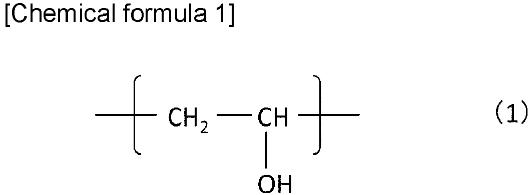

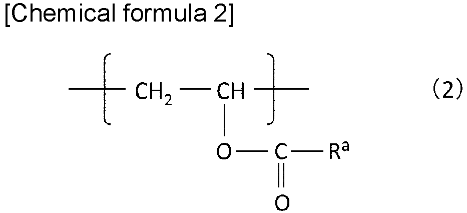

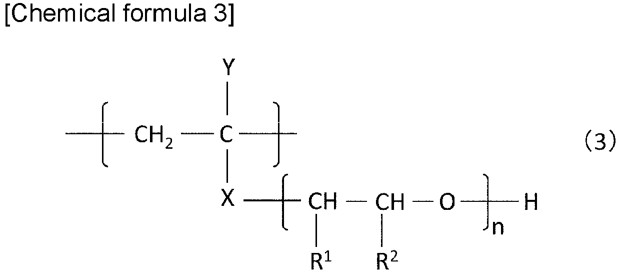

The vinyl alcohol unit (1) and the vinyl ester unit (2) both are derived from a vinyl ester compound used as a monomer making up the PVA-based resin.

Examples of the vinyl ester monomer include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, vinyl versatate and the like. Of these, vinyl acetate is preferably used because of economy.

Therefore, in the formula (2), R^{a} is an alkyl group having from 1 to 18 carbon atoms and depends on the vinyl ester compound used as a raw material for synthetizing the PVA-based resin. R^{a} is preferably a methyl group, and a preferable vinyl ester unit is vinyl acetate unit represented by the formula (2').

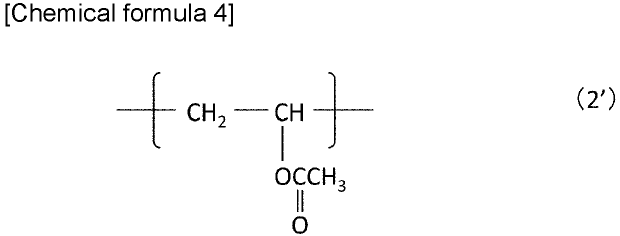

The oxyalkylene group-containing unit represented by the formula (3) is derived from the oxyalkylene-supplying vinyl monomer (i.e. vinyl monomer having oxylalkylene) used for copolymerization with the vinyl ester monomer. A compound in which an oxyalkylene group and a vinyl-containing group are linked can be used as the oxyalkylene-supplying vinyl monomer. Specifically, (meth)acrylic acid ester (meth)acrylic acid amide, (meth)allyl ether, vinyl ether and the like may be used, if they contain an oxyalkylene group.

Therefore, in the formula (3), Y is a hydrogen or a methyl group, and X which links the vinyl group to the oxyalkylene group is usually a single bond or a binding chain. Examples of the binding chain include methylene group, ethylene group, ether bond (-O-), amide bond (-CONH-), ester bond (-COO-), and -CH₂O-. Of these, methylene group, ether bond, and amide bond are preferable, because they do not almost affect the PVA-based resin and the oxyalkylene group.

R¹ and R² each is usually independently a hydrogen atom or an alkyl group having from 1 to 10 carbon atoms, and n is an integer of 1 to 50, depending on the type of the oxyalkylene group. Hereinafter, n is an average value of oxyalkylene group-containing units contained in the PVA-based resin. In general, the repeating number (n) of oxyalkylene is an integer chosen from the range of 1 to 100 for an individual oxyalkylene group-containing unit. A measurement with use of a nuclear magnetic resonance spectroscopy (NMR) provides an average value for the repeating number n.

A proportion of oxyalkylene group in the oxyalkylene group-containing PVA-based resin which is an element of the invention is not particularly limited, but the proportion is usually from 0.1 to 10 mol%, preferably from 0.5 to 5 mol%. In general, an oxyalkylene group-containing PVA-based resin which has an unduly high proportion of oxyalkylene group may be difficult to increase polymerization degree in the synthesis thereof, resulting in difficulty to satisfy intended physical properties as a final product therefrom. Also, physical properties such as mechanical strength and gas-barrier property may be impaired in the case of such oxyalkylene group-containing PVA-based resin without a desired high polymerization degree. On the other hand, an oxyalkylene group-containing PVA-based resin which has unduly low proportion of oxyalkylene group tends to be low in flexibility, have a relatively high melting point, and impair moldability. Hereinafter, the proportion of oxyalkylene group is determined based on a rate (mol%) of the oxyalkylene-supplying monomer with respect to the total of charged vinyl monomers for the synthesis.

A saponification degree of the oxyalkylene group-containing PVA-based resin is usually from 60 to 100 mol%, preferably from 70 to 99 mol%, more preferably from 80 to 95 mol%, and still more preferably from 88 to 94 mol%. The saponification degree is appropriately selected depending on an intended water solubility. The saponification degree is determined based on an amount of alkali consumed for hydrolysis of the residual acetate in the resin, and is measured according to JIS K6726.

An average polymerization degree of the oxyalkylene group-containing PVA-based resin is usually from 100 to 3000, and preferably from 200 to 1000. An oxyalkylene group-containing PVA-based resin having an unduly high average polymerization degree may become difficult to be melt molded. An oxyalkylene group-containing PVA-based resin having an unduly low average polymerization degree may not meet a satisfactory strength.

In addition to the above-mentioned vinyl ester monomer and oxyalkylene-supplying vinyl monomer, the oxyalkylene group-containing PVA-based resin to be packed may include other monomer copolymerized within the range of 10 mol% or less, preferably 5 mol% or less, and particularly preferably 1 mol% or less. Examples of other monomers include olefins such as ethylene, propylene, isobutylene, α-octene, α-dodecene, and α-octadecene; hydroxy group-containing α-olefins such as 3-buten-1-ol, 4-penten-1-ol, 5-hexen-1-ol, 3,4-dihydroxy-1-butene and derivatives such as acylated products thereof; unsaturated acids such as acrylic acid, methacrylic acid, crotonic acid, maleic acid, maleic anhydride, itaconic acid, undecylenic acid, or salts, monoesters, or dialkyl esters thereof; nitriles such as acrylonitrile and methacrylonitrile; amides such as acrylamide and methacrylamide; olefin sulfonic acids such as ethylene sulfonic acid, allyl sulfonic acid, methallyl sulfonic acid or salts thereof; alkyl vinyl ethers; vinyl compounds such as dimethylallyl vinyl ketone, N-vinylpyrrolidone, vinyl chloride, vinylethylene carbonate, 2,2-dialkyl-4-vinyl-1,3-dioxolane, glycerin monoallyl ether; substituted vinyl acetates such as isopropenyl acetate, and 1-methoxyvinyl acetate; vinylidene chloride, 1,4-diacetoxy-2-butene, 1,4-dihydroxy-2-butene, vinylenecarbonate and the like.

For polymerization of the vinyl monomers and saponification of the resultant polymers, respective known methods in the production of polyvinyl alcohol may be adopted.

The oxyalkylene group-containing PVA-based resin comprising the above-mentioned units is readily oxidized in the oxyalkylene group to generate a compound having a carboxyl group.

The compound having a carboxyl group is not limited to a compound generated by oxidization of a primary hydroxyl group at the terminal of the oxyalkylene group of the oxyalkylene group-containing PVA-based resin. An oxyalkylene group-containing PVA-based resin may be hydrolyzed in the oxyalkylene group to generate a polyethylene glycol separated from the main chain of the PVA-based resin. Thus generated polyethylene glycol as an oxidative decomposition product is also included in the compound having a carboxyl group generated by the oxidation of the oxyalkylene group. The polyethylene glycol as an oxidative decomposition product may be not only a low boiling point compound such as acetic acid, but also a long-chain compound having a high boiling point. A long chain carboxylic acid as the long chain compound may cause to increase viscosity during melt kneading.

The long chain carboxylic acid may be a monocarboxylic acid or dicarboxylic acid having a repeated oxyalkylene group. The repeating number (n) is usually an integer of 1 to 50, depending on the oxyalkylene group unit derived from the oxyalkylene group-containing PVA-based resin.

The long-chain and high boiling point compound having a carboxyl group includes a monocarboxylic acid such as diethylene glycol monocarboxymethyl ether and triethylene glycol monocarboxymethyl ether; and a dicarboxylic acid such as ethylene bisglycolic acid and diethylene glycol biscarboxymethyl ether.

The above-mentioned compound having a carboxyl group may be a cause of coloring of the oxyalkylene group-containing PVA-based resin. Further, the presence of the compound having carboxyl group may cause to increase the viscosity of the oxyalkylene group-containing PVA-based resin in melt kneading operation. In particular, a long-chain carboxylic acids as a high boiling point compound causes a serious increase of viscosity during melt kneading of the oxyalkylene group-containing PVA-based resin.

The compound having a carboxyl group can be detected by a method of determining an acid value of a chemical product in accordance with JIS K0070, for instance, a neutralization titration method, potentiometric titration, gas chromatography equipped with mass spectrometer (GC-MS) for a low boiling point compound, and high performance liquid chromatography equipped with mass spectrometer (HPLC-MS) for a high boiling point compound.

The oxyalkylene group-containing PVA-based resin having a structure described above is packed in a bag, in a form of powder, granules, pellets or the like.

### <Bag>

The bag used in the package of the invention has an oxygen permeability of 1000 cc/m² • day · atm or less, preferably 500 cc/m² · day · atm or less, more preferably 300 cc/m² · day · atm or less, still more preferably 100 cc/m² · day · atm or less, particularly preferably 10 cc/m² • day · atm or less, as an amount of oxygen permeated in 24 hours (1 day) per 1 m² of the film under a condition of 25 °C and 65 %RH.

The film constituting the bag may be either a single-layer film or a multilayer film. Examples of the multilayer film include a laminate film in which from 2 to 10 layers, preferably from 2 to 6 layers of plastic films are laminated; a metal foil-attached film in which a metal foil is attached on a plastic film; metal vapor-deposited film in which metal is deposited on one or both sides of a plastic film; laminated structure in which a plastic film is further laminated on a metal vapor-deposited film or a metal foil-attached film, and the like.

A protective sheet made of paper, a non-woven fabric or a woven fabric, or a knitted fabric may be further attached to the outer surface of the single-layer film or the multilayer film.

In the case of the multilayer film, the laminating method is not particularly limited. Films may be laminated via an adhesive layer, a laminated film may be produced by extruding a molten thermoplastic resin onto a base film, or by co-extruding a plurality of thermoplastic resins.

The multilayer film may be either a multilayer film containing one oxygen barrier layer satisfying the above gas barrier property, or a multilayer film satisfying the above oxygen barrier property as a whole multilayer structure.

Examples of the oxygen barrier layer include a metal foil such as an aluminum foil, a metal (e.g. aluminum) vapor-deposited layer, a (biaxially) oriented polypropylene film, a polyethylene terephthalate film, a polyamide film, an ethylene-vinyl alcohol (EVOH) film, and a vinylidene chloride film. One or more of these oxygen barrier layers may be contained in the multilayer film.

Of these, an aluminum foil, an aluminum vapor-deposited layer, and a biaxially oriented polypropylene film are particularly preferable as the oxygen barrier layer. These can achieve an oxygen permeability of 100 cc/m²·day·atm or less, preferably 10 cc/m²·day·atm or less, as an amount of oxygen permeated in 24 hours (1 day) per 1 m² of the film under a condition of 25 °C and 65 %RH, in terms of thickness of 25 µm. Such an oxygen barrier layer may be used as a layer of a multilayer film comprising various layers other than the gas-barrier property according to needs. Thereby, a multilayer film having a required property such as flexibility, strength, light weight as a bag, and handling property, in addition to the gas barrier property.

As described above, in the oxyalkylene group-containing PVA-based resin, the oxyalkylene group is readily oxidized to produce a carboxyl group-containing compound. The carboxyl group undergoes a crosslinking reaction with an OH group in the molecular chain of the same oxyalkylene group-containing PVA-based resin or an OH group of another oxyalkylene group containing PVA-based resin. The crosslinked substance produced is considered to induce the viscosity increase during melt kneading. Therefore, avoiding the increase in oxygen concentration in the package would be effective for the suppression of the oxidation of the oxyalkylene group. Thus suppression would be effective for suppression of increasing viscosity during melt kneading as well.

Further, since the carboxyl group-containing compound also causes coloring of the PVA-based resin, suppressing the generation of the carboxyl group-containing compound may suppress the coloring, and as a result, deterioration in the quality of the PVA-based resin molded article such as film would be prevented.

According to the invention, a preferable film constituting the bag further has a water vapor permeability of 300 g/m²·day or less, particularly 200 g/m²· day or less, more particularly 100 g/m²·day or less, further more particularly 10 g/m²·day or less, as an amount of water vapor permeated per 24 hours (1 day) per 1 m² of the film under a condition of 40 °C and 90 %RH.

The oxyalkylene group-containing PVA-based resin like a typical PVA-based resin absorbs moisture easily. Once an oxyalkylene group-containing PVA-based resin absorbs moisture to be plasticized, resulting in undergoing an oxidation by oxygen to generate a decomposition product. Further, due to moisture absorption, the oxyalkylene group-containing PVA-based resin powder or pellets may adhere to each other to form an agglomerate. From this point of view, the lower the water vapor permeability of the film constituting the bag, the more preferred.

The thickness of the film constituting the bag is appropriately selected depending on the type of film because the thickness affects oxygen permeability, strength, flexibility, and handling property. In the case of a multilayer film including a gas-barrier layer, the total thickness is usually from 20 to 500 µm, preferably from 30 to 200 µm. A film having unduly thickness may provide a heavy bag, and tends to impair the flexibility of the bag.

If a multilayer film includes a gas-barrier layer, a desirable gas-barrier property can be achieved despite of the thickness. In the case of the multilayer film, a required strength can be secured by laminating a protective sheet such as paper or cloth. When the protective sheet is laminated, the total thickness may exceed 500 µm as long as the bag and the package meet a handling property such as flexibility.

The bag used in the package of the invention is obtainable by shaping the above-mentioned film into a bag. The bag may have any mode and shape as long as the object can be packed in a bag. Specific examples include a three-side sealed bag which has heat-sealed three edges of both sides and the bottom of the bag; a side seal bag made by folding the film in half and heat-fuse seals both sides; a bag having an opening at two adjacent sides made by cutting two stacked films with an L-shaped seal; a bottom gusset bag with a gusset on the bottom as a bag; a horizontal gusset bag with gussets on both sides; a bag having a fastener or zipper at the opening, and the like.

These bags may be made, for instance, by heat sealing a film for the bag. Alternatively, in the case of a single-layer film, a bag may be directly made from a thermoplastic resin as a raw material by a tubular film method in which a tubular film is extruded through a ring die.

The method of closing the opening of the bag is not particularly limited. Various methods such as heat sealing, adhesive, sealing with fastener or zipper can be applied, and the method is appropriately selected depending on the configuration of the bag.

The bag has a common shape in a general distribution form. Typically, a square bag having a long side of 50 to 150 cm and a short side of 30 to 80 cm is common in the case of the bag whose capacity ranges from 10 to 30 kg.

### <Possible other objects to be packed>

In addition to the oxyalkylene group-containing PVA-based resin, the following may be packed in the package of the present invention.

### (1) PVA-based resins other than oxyalkylene group-containing PVA-based resin

A PVA-based resin other than the oxyalkylene group-containing PVA-based resin, such as an unmodified PVA-based resin and another modified PVA-based resin (collectively referred to as "other type of PVA-based resin") may be packed together. These other types of PVA-based resins may be packed in the form of powder, granules, pellets and the like.

When packed as a mixture with other type of PVA-based resin, the percentage of the oxyalkylene group-containing PVA-based resin may be 50% by weight or more, preferably 60% by weight or more, more preferably 80% by weight or more, and particularly preferably 90% by weight or more, based on the total weight of the PVA-based resin contained in the package.

### (2) Antioxidant

Examples of the antioxidant include dibutylhydroxytoluene, butylhydroxyanisole, and tocopherol.

Such an antioxidant may be packed in a form of powder, pellet or granule, and may be mixed with powdery or pellet-shaped oxyalkylene group-containing PVA-based resin. Alternatively, an individual packet of pellets or granular antioxidants may be packed in the package of the oxyalkylene group-containing PVA-based resin.

The percentage of the antioxidant contained in the package is from 1 to 10000 ppm, preferably from 1 to 1000 ppm, and more preferably from 5 to 500 ppm with respect to the oxyalkylene group-containing PVA-based resin.

### (3) Possible other items to be packed

In addition to the above-mentioned objects, a drying agent for preventing moisture absorption of the PVA-based resin, a lubricant for improving processing characteristics during melt molding, and the like may be packed as long as the effects of the invention are not impaired. These may be mixed in a form of powder, pellet or granule with a powdery or pellet-shaped oxyalkylene group-containing PVA-based resin. Alternatively, an individual packet of these items may be packed together in the package of the oxyalkylene group-containing PVA-based resin.

### <Package>

The package of the invention may be produced by putting oxyalkylene-containing PVA-based resin, and the other objects or items according to needs, in the bag having an oxygen permeability of 1000 cc/m²·day·atm or less, and thereafter sealing the opening of the bag.

After inserting the object or items to be packed through the opening of the bag, the opening may be closed. The method of closing the opening may be performed with use of an adhesive, a heat seal, a fastener or a zipper, depending on the type of the bag.

A package having the above configuration can be stored for one to several months from the shipment at the manufacturing site. When a user takes out the PVA-based resin (oxyalkylene group-containing PVA-based resin) for feeding as a melt molding material even after being stored for one to several months, unpredicted increase in viscosity during melt kneading of the oxyalkylene group-containing PVA-based resin may not be occurred due to preventing the PVA-based resin from oxidation.

### [Method of manufacturing a package]

According to the invention, a method for manufacturing a package is also included. The method comprises packing the oxyalkylene group-containing polyvinyl alcohol-based resin in a bag made of a film having an oxygen permeability of 1000 cc/m²·day·atm or less as an amount of oxygen permeated in 24 hours per 1 m² of the film under a condition of 25 °C and 65 %RH.

The bag described in the package of the invention may be used in the manufacturing method of the invention.

The oxyalkylene group-containing polyvinyl alcohol-based resin to be packed in the bag is an oxyalkylene group-containing polyvinyl alcohol-based resin described in the package of the invention. In the case that other possible objects or items listed earlier are further packed, they may be charged as a mixture with the oxyalkylene group-containing polyvinyl alcohol-based resin before or after charging the oxyalkylene group-containing polyvinyl alcohol-based resin.

After packing, the opening of the bag is closed. The methods of packing and sealing the opening are appropriately selected according to the type or shape of the bag used. As for sealing, a heat seal, fastener, zipper, or adhesive may be adopted, depending on the type of bag.

### EXAMPLES

### [Method for measurement and evaluation]

### 1. Oxygen permeability (cc/m²·day·atm)

For the film constituting a bag, the oxygen permeation amount per 1 m² at 25 °C and 65 %RH for 24 hours was measured by using the MOCON method (OXTRAN coulometric method) according to JIS7126-2.

### 2. Water vapor permeability (g/m²·day)

With regard to the film constituting a bag, the water vapor permeation amount per 1 m² of the film at 40 °C and 90 %RH was measured by a cup method according to JIS Z0208.

### 3. Acid value (mgKOH/mg)

The PVA-based resin immediately after being produced which was powder that have passed through a sieve with a mesh opening size of 2800 µm was packed with a bag to prepare a package. After storing the package in a blower dryer at 60 °C for a certain period (1 month, 2 months or 3 months), the PVA-based resin was taken out from the bag and was measured with regard to the acid value with potentiometric titration according to JIS K0070. A large acid value means a large content of the carboxyl group-containing compound, and indicates that the oxidation of the oxyalkylene group was proceeded.

### 4. Melt viscosity stability

The PVA-based resin immediately after being produced was powder that have passed through a sieve with a mesh opening size of 2800 µm. The PVA-based resin was packed with a bag to preparer a package. After storing the package for a certain period (1 month, 2 months or 3 months), the PVA-based resin was taken out from the bag and was measured with regard to a dynamic viscosity behavior in a molten state at respective storing time period. The changes of the dynamic viscosity behavior over time were compared. In the test, the dynamic viscosity behavior was monitored with a Lab-Plast mill by Brabender GmbH & Co. (Plastograph EC Plus) for 2 hours in the kneading operation at 210 °C and a rotation speed of 50 rpm. From the monitoring, a graph showing a relationship between a kneading time and a torque value of the instrument was obtained. Moreover, the time period (minutes) until the viscosity reaches a peak point or maximum torque value was determined from the graph and adopted as an index of melt viscosity stability. The increase in torque of the instrument means an increase in the viscosity of the resin in a molten state. Moreover, the peak arrival time was compared with that of the PVA-based resin immediately after the production.

### 5. Yellowness (Yl value)

The PVA-based resin immediately after being produced, which was powder that has passed through a sieve with a mesh opening size of 2800 µm, was packed with a bag to prepare a package. After storing the package for a certain period (1 month, 2 months or 3 months), the PVA-based resin was taken out from the bag and was measured with regard to the yellowness (Yl value) with a spectral colorimeter SE6000 manufactured by Nippon Denshoku Industries Co., Ltd. The value of ΔYI ASTM (D1925) was adopted as the Yl value data.

### [Objects to be packed]

The following oxyethylene group-containing PVA-based resin or unmodified polyvinyl alcohol powder was packed to prepare a package.

### (1) Oxyethylene group-containing PVA-based resin

Polyoxyethylene allyl ether with an average chain length n=15 was used as an oxyethylene group-containing monomer. 35 parts of vinyl acetate, 8.6 parts (corresponding to 1 mol% based on the amount of charged vinyl acetate) of the oxyethylene group-containing monomer, and 15 parts of methanol were charged into a polymerization reactor. The reactor was heated to attain a reflux state. Then, 0.3 mol% (based on the total amount of vinyl acetate) of azobisisobutyronitrile was charged in the reactor, and the polymerization reaction was proceeded. While the polymerization reaction was carried out, 65 parts (65% based on the total amount charged) of vinyl acetate was added dropwise to the reactor at a constant rate, and a methanol solution of oxyethylene group-containing polyvinyl acetate was obtained. The oxyethylene group-containing polyvinyl acetate was saponified with sodium hydroxide to obtain a desirable oxyethylene group-containing PVA-based resin.

Thus produced oxyethylene group-containing PVA-based resin had an oxyethylene group at a proportion of 1 mol%. The powdery oxyethylene group-containing PVA-based resin that has passed through a sieve with a mesh opening size of 2800 µm was used. The saponification degree of this oxyethylene group-containing PVA-based resin was 93.5 mol%, and the average polymerization degree was 550. The saponification degree was determined based on an amount of alkali consumed for hydrolysis of residual vinyl acetate in accordance with JIS K6726. The average polymerization degree was measured in accordance with JIS K6726.

The volatile component such as water and methanol was contained at a concentration of 4% by weight based on the oxyethylene group-containing PVA-based resin.

The acid value of the oxyethylene group-containing PVA-based resin immediately after being produced was less than 0.05 mgKOH/mg (below limit of detection) as a measurement value based on the above measurement method. The peak arrival time determined by the melt viscosity stability test was 94 minutes. Moreover, the value of ΔYI ASTM (D1925) was 5.8.

### (2) Unmodified polyvinyl alcohol-based resin

An unmodified polyvinyl alcohol-based resin having a saponification degree of 88 mol% measured in accordance with JIS K6726, an average polymerization degree of 500 measured in accordance with JIS K6726, and containing 4% by weight of a volatile component (water, methanol), was used.

The acid value of the unmodified PVA-based resin immediately after being produced was 0.37 mgKOH/mg measured according to the above-mentioned measurement method. This acid value was higher than that of the oxyethylene group-containing PVA-based resin immediately after the production, which is presumed to generate an acetic acid by hydrolysis of unsaponified acetyl group. The peak arrival time determined by the melt viscosity stability test was 76 minutes. The value of ΔYl ASTM (D1925) was 6.2.

### [Bag]

The following four types of bags (f1-f4) were used. The film constituting the respective bag had an oxygen permeability and water vapor permeability as shown in Table 1.

### f1:

A standard aluminum bag ALH-8 for vacuum packaging (Tokyo Garasu Kikai Co., Ltd.), which was a three-side sealed bag of a multilayer (total thickness 116 µm) having a layer structure of polyethylene terephthalate (12 µm) / aluminum (9 µm) / polyamide (15 µm) / non-oriented polypropylene (80 µm), which was positioned from the inside of the bag.

The aluminum foil was placed as a gas barrier layer and had an oxygen permeation amount below limit of detection (less than 0.01cc/m²·day·atm) which was the converted value at a thickness of 25 µm. The bag was made of the film having a thickness of 116 µm and an oxygen permeation amount below limit of detection as well.

### f2:

A three-side sealed bag made of a five-layer film obtained by co-extruding polyamide (PA), adhesive resin, and polyethylene (PE) with a three-type five-layer extruder. The five-layer film had a total thickness of 71 µm and the following layer structure (the left end was positioned inside of the bag).

PA / PA / Adhesive / PE / PE (total thickness of PA layers: 53 µm, and total thickness of PE layers: 15 µm).

The bag was made of the film (total thickness 71 µm) having an oxygen permeation amount of 61 cc/m²·day·atm. The polyamide film was placed as a gas barrier layer and had an oxygen permeation amount of 129 cc/m²·day·atm which was a converted value at a thickness of 25 µm.

### f3:

A three-side sealed bag made of a laminated film (thickness 60 µm) obtained by dry-laminating a biaxially oriented polypropylene (OPP) film (thickness 20 µm) and a non-oriented polypropylene (non-oriented PP) film (thickness 40 µm), wherein the OPP film was positioned inside the bag.

The bag was made of the film (thickness 60 µm) having an oxygen permeation amount of 3.9 cc/m²·day·atm. The OPP film was placed as a gas barrier layer and had an oxygen permeation amount of 3.1 cc/m²·day·atm which was a converted value at a thickness of 25 µm.

### f4:

Unipack^{®} (SEISANNIPPONSHA LTD.), which was a bag of single-layer film of low density polyethylene (thickness 40 µm) with a zipper, was used.

The low density polyethylene film had an oxygen permeation amount of 2000 cc/m²·day·atm which was a converted value at a thickness of 25 µm.

**[Table 1]**

| **Bag No** | **layer structure** | **oxygen permeability cc/m²·day·atm** | **water vapor permeability g/m²** • **day** |
|---|---|---|---|
| **f1** | **PET / AI / PA / non-oriented PP** | **<0.01 (below limit of detection)** | **<0.5 (below limit of detection)** |
| **f2** | **PA / PA / adhesive / PE / PE** | **61** | **11.2** |
| **f3** | **OPP / non-oriented PP** | **3.9** | **2.8** |
| **f4** | **single layer LDPE** | **>2000** | **12.4** |

### [Manufacture and evaluation of package]

As shown in Table 2, packages No.1 to No.6 were prepared by putting the oxyethylene group-containing PVA-based resin powder or the unmodified PVA resin powder, both of which were produced above, into a bag chosen from f1 to f4, and closing the opening of the bag with a heat seal or a zipper.

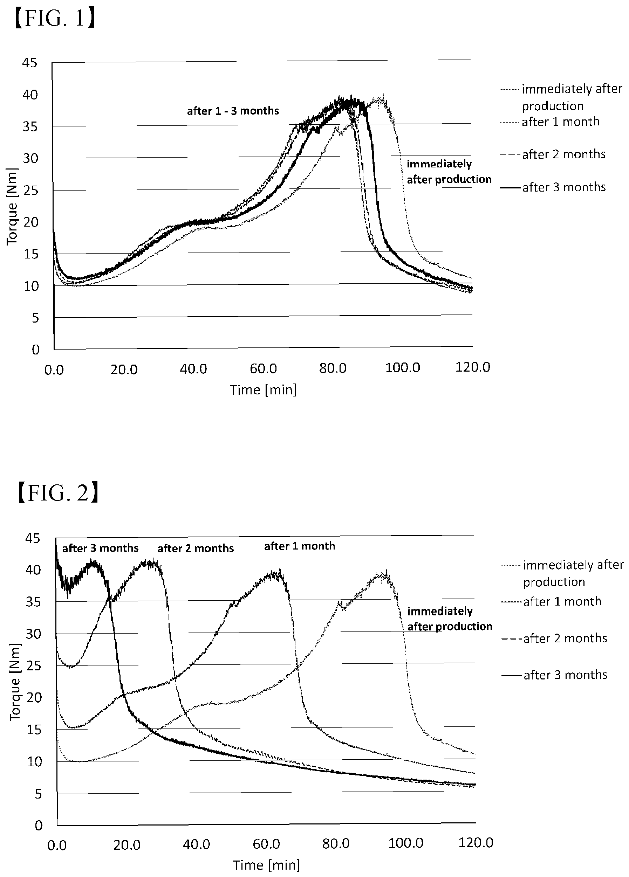

The prepared package was stored at 60 °C for 1 month, 2 months or 3 months in a thermostat. Therefore, the PVA-based resin was taken out from the package, and the acid value, melt viscosity stability, and yellowness were examined in accordance with the above measurement method. Table 1 shows the configuration and measurement results of each package. Further, graphs showing the viscosity behavior of the oxyethylene group-containing PVA-based resin taken out from the packages No.1 and No.4 are shown in Figs. 1 and 2, respectively. In the figures, the vertical axis represents the torque (Nm) of the instrument, and the horizontal axis represents the time (minutes).

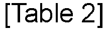

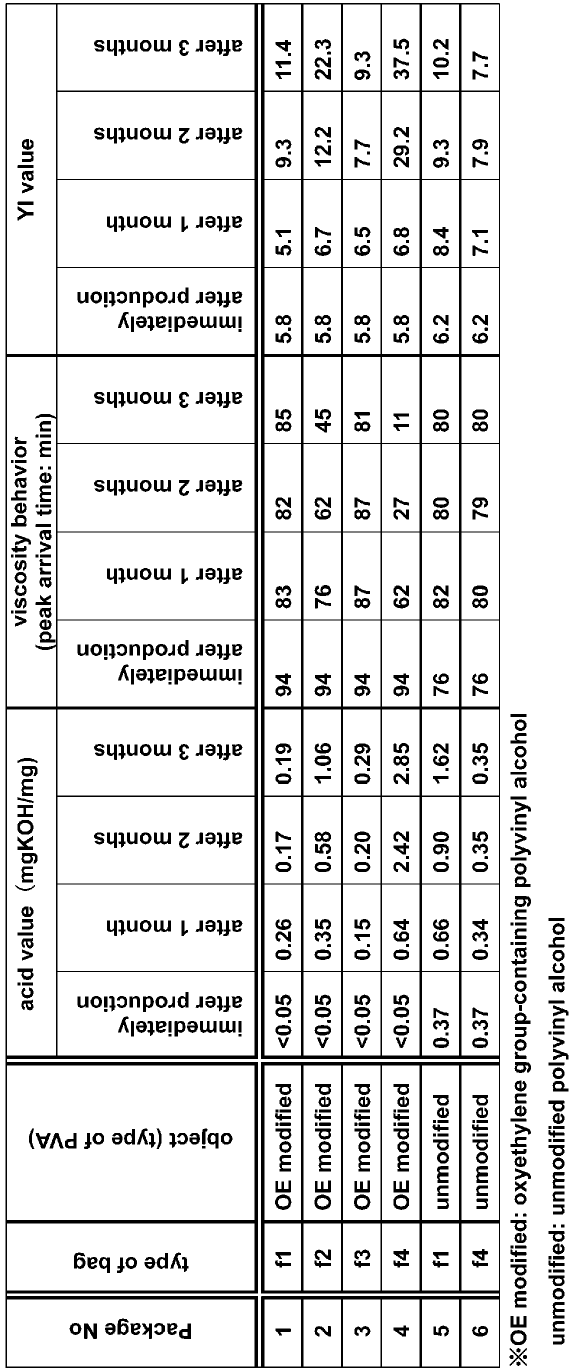

As can be seen from Table 2, the acid value of the package (No.1-No.3), which was produced using a bag (f1, f2 or f3) made of a film having an oxygen permeability of 1000 cc/m²·day·atm or less, had smaller change with storage time period as compared with the acid value of the package (No.4) using a bag (f4) made of a film having an oxygen permeability of more than 2000 cc/m²·day· atm.

In particular, the packages (No.1 and 3), which were produced using the bag (f1 and f3) made of the multilayer film including an oxygen barrier layer having an oxygen permeability of 100 cc/m²·day·atm or less which was an converted value at a thickness of 25 µm, were small in change of their acid value.

The influence of the change in acid value with storage time period could be understood from the viscosity behaviors in Figs. 1 and 2. The viscosity behavior shown in Fig. 1 did not almost shift between 1 month and 3 months, whereas the viscosity behavior shown in Fig. 2, the peak point shifted to the left side after storage of 1 month, 2 months, 3 months in order. It is considered that in the case of the package No.4, carboxylation was proceeded due to the oxidation of the oxyethylene group and the resulting carboxyl group was crosslinked with a hydroxyl group in the PVA-based resin during melt kneading, as a result, the viscosity was increased. Therefore, by packaging with a bag having a low oxygen permeability, the generation of a carboxyl group-containing compound derived from the oxyethylene group-containing PVA-based resin in the package may be suppressed during storage. This can be understood from the fact that the viscosity behavior was kept stable during melt kneading.

On the other hand, in the case that an unmodified PVA-based resin was packed, the acid value did not fluctuate even in the package (No.6), which was produced using the bag (f4) made of a film having an oxygen permeability of more than 2000 cc/m²·day·atm. This fact also proved that the influence of the oxygen permeability of the bag appeared peculiarly in the case of the package of an oxyalkylene group-containing PVA-based resin.

In addition, regarding the package (No.5) in which the unmodified PVA resin was packed with the bag f1, an increase of acid value was observed, which was presumed to generate acetic acid by hydrolysis of the residual acetic acid groups which was triggered by water remained in the unmodified PVA-based resin. The generated acetic acid is volatile because of low molecular weight compound. This acetic acid derived from the unmodified PVA resin is distinguishable from a polymer compound having a carboxyl group which is generated from the reaction of the oxyalkylene group-containing PVA with oxygen. The polymer compound having a carboxyl group may induce viscosity increase, which is a problem to be solved by the invention. In other words, the acetic acid derived from the unmodified PVA is not involved in the problem to be solved by the invention. Therefore, in the case of No.5, the crosslinking reaction did not occur regardless of the increase of the acid value, and the viscosity behavior was stable during melt kneading.

The Yl value increased with storage time period, but in storage for 2 months or 3 months, the degree of increase in coloring in the case of the package (No.1 or No.3) using bag (f1 or f3) with low oxygen permeability was suppressed down to 1/2 or less, preferably 1/3 or less, comparing with that in the case of the package (No.2 or No.4) using bag (f2 or f4) with high oxygen permeability. The suppression level of coloring was as good as that of the unmodified PVA resin.

### INDUSTRIAL APPLICABILITY

According to the package of the present invention, oxidation of the oxyalkylene group-containing PVA-based resin packed in the package can be suppressed even when the package is stored for a long time period. Therefore, if the package of an oxyalkylene group-containing PVA-based resin is delivered to a user through a distribution process under a harsh condition, the user may be free from a problem concerning workability during melt kneading and melt molding. Further, since coloring of the oxyalkylene group-containing PVA-based resin due to storage of the package can be suppressed, the user of the oxyalkylene group-containing PVA-based resin could provide an article having properties expected from inherent properties of the packed oxyalkylene group-containing PVA-based resin.

## Claims

1. A package comprising
a bag made of a film having an oxygen permeability of 1000 cc/m²·day· atm or less as an amount of oxygen permeated in 24 hours per 1 m² of the film under a condition of 25 °C and 65 %RH; and
an oxyalkylene group-containing polyvinyl alcohol-based resin packed in the bag.

2. The package according to claim 1, wherein the oxyalkylene group-containing polyvinyl alcohol-based resin has a structural unit represented by a general formula (3), wherein X is a single bond or a binding chain, Y is a hydrogen atom or a methyl group, n is an integer of 1 to 50, and R¹ and R² each is independently a hydrogen atom or an alkyl group.

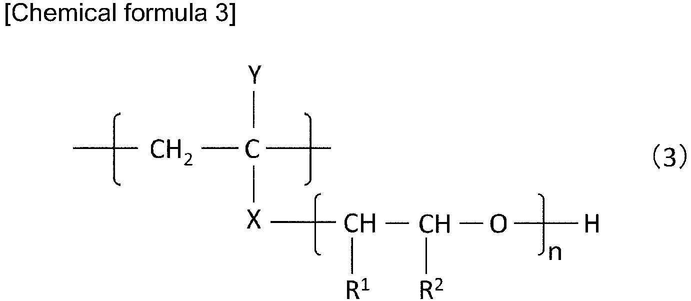

3. The package according to claim 1 or 2, wherein the film constituting the bag has a water vapor permeability of 300 g/m²·day or less as an amount of water vapor permeated in 24 hours per 1 m² of the film under a condition of 40 °C and 90 %RH.

4. The package according to any one of claims 1 to 3, wherein the film constituting the bag is a multilayer film having an oxygen permeability of 1000 cc/m²·day·atm or less as an amount of oxygen permeated in 24 hours per 1 m² of the film under a condition of 25 °C and 65% RH.

5. The package according to claim 4, wherein the multilayer film includes a barrier layer having an oxygen permeability of 100 cc/m²·day·atm or less as an amount of oxygen permeated in 24 hours per 1 m² of the film under a condition of 25 °C and 65 %RH in terms of a thickness of 25 µm.

6. The package according to claim 5, wherein the barrier layer is an aluminum foil, an aluminum vapor-deposited layer, or a biaxially oriented polypropylene film.

7. A method of manufacturing a package, comprising packing an oxyalkylene group-containing polyvinyl alcohol-based resin in a bag made of a film having an oxygen permeability of 1000 cc/m²·day·atm or less as an amount of oxygen permeated in 24 hours per 1 m² of the film under a condition of 25 °C and 65 %RH.

8. The method of manufacturing a package according to claim 7, wherein the oxyalkylene group-containing polyvinyl alcohol-based resin has a structural unit represented by a general formula (3) wherein X is a single bond or a binding chain, Y is a hydrogen atom or a methyl group, n is an integer of 1 to 50, and R¹ and R² each is independently a hydrogen atom or an alkyl group.

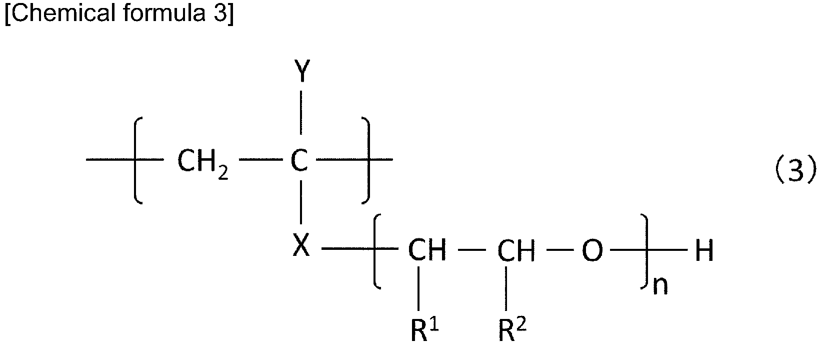

## Patentansprüche

1. Verpackung, umfassend
einen Beutel aus einer Folie mit einer Sauerstoffdampfdurchlässigkeit von 1000 cm³/m²·Tag·atm oder weniger als eine Menge an Sauerstoff, die in 24 Stunden pro 1 m² der Folie unter den Bedingungen von 25 °C und 65 % relativer Feuchtigkeit durchdringt; und
ein Oxyalkylengruppen enthaltendes Harz auf Polyvinylalkoholbasis, das in dem Beutel verpackt ist.

2. Verpackung nach Anspruch 1, wobei das Oxyalkylengruppen enthaltende Harz auf Polyvinylalkoholbasis eine Struktureinheit aufweist, die durch die allgemeine Formel (3) dargestellt wird, wobei X eine Einfachbindung oder eine Bindungskette ist, Y ein Wasserstoffatom oder eine Methylgruppe ist, n eine ganze Zahl von 1 bis 50 ist und R¹ und R² jeweils unabhängig voneinander ein Wasserstoffatom oder eine Alkylgruppe sind.

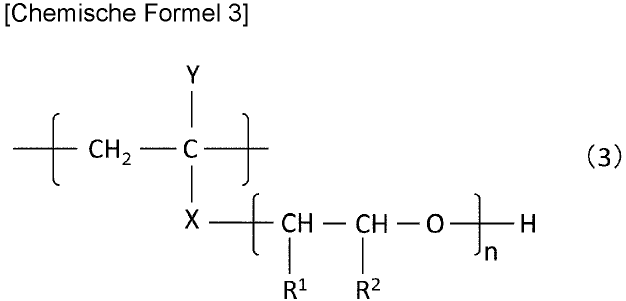

3. Verpackung nach Anspruch 1 oder 2, wobei die Folie, aus welcher der Beutel besteht, eine Wasserdampfdurchlässigkeit von 300 g/m² · Tag oder weniger als eine Menge an Wasserdampf, die in 24 Stunden pro 1 m² der Folie unter einer Bedingung von 40 °C und 90 % relativer Feuchtigkeit durchdringt, aufweist.

4. Verpackung nach einem der Ansprüche 1 bis 3, wobei die Folie, aus welcher der Beutel besteht, eine Mehrschichtfolie mit einer Sauerstoffdurchlässigkeit von 1000 cm³/m²·Tag·atm oder weniger als eine Menge an Sauerstoff ist, die in 24 Stunden pro 1 m² der Folie unter einer Bedingung von 25 °C und 65 % relativer Feuchtigkeit durchdringt.

5. Verpackung nach Anspruch 4, wobei die mehrschichtige Folie eine Sperrschicht mit einer Sauerstoffdurchlässigkeit von 100 cm³/m²·Tag·atm oder weniger als eine Menge an Sauerstoff umfasst, die in 24 Stunden pro 1 m² der Folie unter einer Bedingung von 25 °C und 65 % relativer Feuchtigkeit in Bezug auf eine Dicke von 25 µm durchdringt.

6. Verpackung nach Anspruch 5, wobei die Sperrschicht eine Aluminiumfolie, eine aufgedampfte Aluminiumschicht oder eine biaxial orientierte Polypropylenfolie ist.

7. Verfahren zur Herstellung einer Verpackung, umfassend das Verpacken eines Polyvinylalkohol-basierten Harzes, das eine Oxyalkylengruppe enthält, in einem Beutel, der aus einer Folie hergestellt ist, die eine Sauerstoffdurchlässigkeit von 1000 cm³/m²·Tag·atm oder weniger als eine Menge an Sauerstoff aufweist, die in 24 Stunden pro 1 m² der Folie unter einer Bedingung von 25 °C und 65 % relativer Feuchtigkeit durchdringt.

8. Verfahren zur Herstellung einer Verpackung nach Anspruch 7, wobei das Oxyalkylengruppen enthaltende Harz auf Polyvinylalkoholbasis eine Struktureinheit aufweist, die durch eine allgemeine Formel (3) dargestellt wird, wobei X eine Einfachbindung oder eine Bindungskette ist, Y ein Wasserstoffatom oder eine Methylgruppe ist, n eine ganze Zahl von 1 bis 50 ist und R¹ und R² jeweils unabhängig voneinander ein Wasserstoffatom oder eine Alkylgruppe sind.

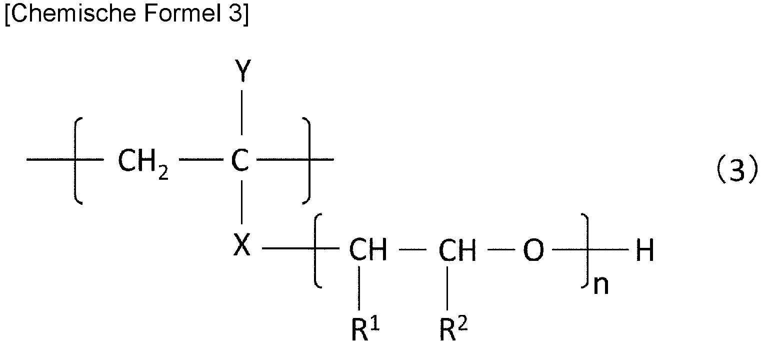

## Revendications

1. Emballage comprenant
un sac constitué d'un film ayant une perméabilité à l'oxygène de 1000 cc/m²·jour·atm ou moins en tant que quantité d'oxygène perméable en 24 heures par 1 m² du film dans des conditions de 25 °C et 65 %HR; et
une résine à base d'alcool polyvinylique contenant un groupe d'oxyalkylène, emballée dans le sac.

2. L'emballage selon la revendication 1, dans lequel la résine à base d'alcool polyvinylique contenant un groupe oxyalkylène a une unité structurelle représentée par une formule générale (3), dans laquelle X est une liaison simple ou une chaîne de liaison, Y est un atome d'hydrogène ou un groupe méthyle, n est un nombre de 1 à 50, et R¹ et R² sont chacun indépendamment un atome d'hydrogène ou un groupe alkyle.

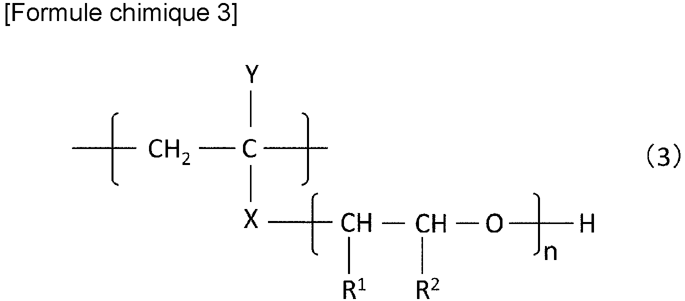

3. L'emballage selon la revendication 1 ou 2, dans lequel le film constituant le sac a une perméabilité à la vapeur d'eau de 300 g/m² -jour ou moins en tant que quantité de vapeur d'eau permise en 24 heures par 1 m² du film dans des conditions de 40 °C et 90 %HR.

4. L'emballage selon l'une des revendications 1 à 3, dans lequel le film constituant le sac est un film multicouche ayant une perméabilité à l'oxygène de 1000 cc/m²·jour·atm ou moins en tant que quantité d'oxygène perméable en 24 heures par 1 m² du film dans des conditions de 25 °C et 65 %HR.

5. L'emballage selon la revendication 4, dans lequel le film multicouche comprend une couche barrière ayant une perméabilité à l'oxygène de 100 cc/m²· jour·atm ou moins en tant que quantité d'oxygène perméable en 24 heures par 1 m² du film dans des conditions de 25 °C et 65 %HR en termes d'épaisseur de 25 µm.

6. L'emballage selon la revendication 5, dans lequel la couche barrière est une feuille d'aluminium, une couche d'aluminium déposée à la vapeur ou un film de polypropylène orienté biaxialement.

7. Procédé de fabrication d'un emballage, consistant à emballer une résine à base d'alcool polyvinylique contenant un groupe oxyalkylène dans un sac constitué d'un film ayant une perméabilité à l'oxygène de 1000 cc/m²-jour-atm ou moins en tant que quantité d'oxygène perméable en 24 heures par 1 m² du film dans des conditions de 25 °C et 65 %HR.

8. Le procédé de fabrication d'un emballage selon la revendication 7, dans lequel la résine à base d'alcool polyvinylique contenant un groupe oxyalkylène a une unité structurelle représentée par une formule générale (3) dans laquelle X est une liaison simple ou une chaîne de liaison, Y est un atome d'hydrogène ou un groupe méthyle, n est un nombre de 1 à 50, et R¹ et R² sont chacun indépendamment un atome d'hydrogène ou un groupe alkyle.
